Europäisches Patentamt

European Patent Office

Office européen des brevets

(19)

(11) Publication number: **0 123 657**

**A1**

(12) # EUROPEAN PATENT APPLICATION

(21) Application number: **84830083.6**

(22) Date of filing: **23.03.84**

(51) Int. Cl.³: **A 01 D 41/12**
**A 01 D 69/06, F 16 H 9/04**

(30) Priority: **26.04.83 IT 6745283**

(43) Date of publication of application:
**31.10.84 Bulletin 84/44**

(84) Designated Contracting States:
**DE FR GB**

(71) Applicant: **PIETRO LAVERDA S.p.A.**

**I-36042 Breganze (Vicenza)(IT)**

(72) Inventor: **Raineri, Giuseppe**
**Via Bellini 20**
**I-36061 Bassano del Grappa (Vicenza)(IT)**

(72) Inventor: **Tonello, Roberto**
**Via IV Novembre 18**
**I-36042 Breganze (Vicenza)(IT)**

(74) Representative: **Notaro, Giancarlo et al,**
**c/o Jacobacci-Casetta & Perani S.p.A. Via Alfieri, 17**
**I-10121 Torino(IT)**

(54) **Reverser device for agricultural machines, particularly combine harvester.**

(57) An agricultural machine, particularly a combine harvester, comprises a front unit (1) for harvesting the produce and a produce treatment unit (2), which include a series of rotary members (4, 5, 6, 2a), and a transmission (9) for driving the rotary members. The machine has means for disconnecting the connection between the drive transmission (9) and the rotary members of the front unit (1) for harvesting the produce when the latter jams as a result of a blockage by the produce. Reverser means (18) are provided for rotating the rotary members of the front harvesting unit (1) in the opposite sense from that of its normal operation in order to expel the material which has caused the blockage. According to the invention, these reverser means (18) include an auxiliary drive transmission (19) which can be engaged when a blockage occurs to connect the rotary members of the front unit (1) of the machine to a continuously rotating shaft (29) forming part of the produce treatment unit (2). In the case of a combine harvester, the rotating shaft (29) used to effect this opposite rotation is the shaft of the threshing cylinder (2a) of the thresher unit (2).

FIG. 1

FIG. 4

Croydon Printing Company Ltd

- 1 -

<u>Reverser device for agricultural machines, particularly combine harvester.</u>

The present invention relates to agricultural machines, particularly combine harvesters, of the known type comprising:

a front unit for harvesting the produce and a produce treatment unit, including a series of rotary members,

a drive transmission for the rotary members,

means for disconnecting the connection between the drive transmission and the rotary members of the front harvesting unit, and

reverser means for rotating the rotary members of the front unit of the machine in the opposite sense from that of normal operation in order to expel the material and free the rotary members in the event of a blockage by the produce.

Various types of reverser devices have already been proposed for allowing the rotary members of the produce harvesting unit to be freed in the event of a blockage without necessitating the stoppage of the machine and direct intervention by the operator.

These known solutions, however, have the disadvantages of being relatively complicated and expensive, of not being easily adaptable to a machine lacking a reverser to begin with, and, above all, of involving a sudden and violent reversing operation which often causes damage to the transmissions (breakage of chains, bending of shafts, etc.).

The object of the present invention is to avoid these disadvantages.

The main characteristic of the machine according to the invention lies in the fact that the reverser means comprise an auxiliary drive transmission which can be engaged when a blockage occurs to connect the rotary members of the front unit of the machine to a continuously rotating shaft forming part of the produce treatment unit.

In the case of a combine harvester, the rotating shaft used to drive the reverse movement of the members of the front unit of the machine through the auxiliary transmission is preferably constituted by the shaft of the threshing cylinder of the thresher unit. Indeed, in conventional combine harvesters, this shaft has one end projecting from the side of the machine, which lends itself to use for the said purpose and enables the assembly of the auxiliary drive transmission by simple and economical operations.

Further characteristics and advantages of the invention will become apparent from the description which follows with reference to the appended drawings, provided purely by way of non-limiting example, in which:

Figure 1 is a schematic side view of a combine harvester,

Figures 2, 3 are side views showing the drive transmission disposed on the two sides of the combine harvester,

Figures 4, 5 illustrate a first embodiment of the reverser device according to the invention in two different conditions of operation, and

Figure 6 illustrates a second embodiment of the reverser device.

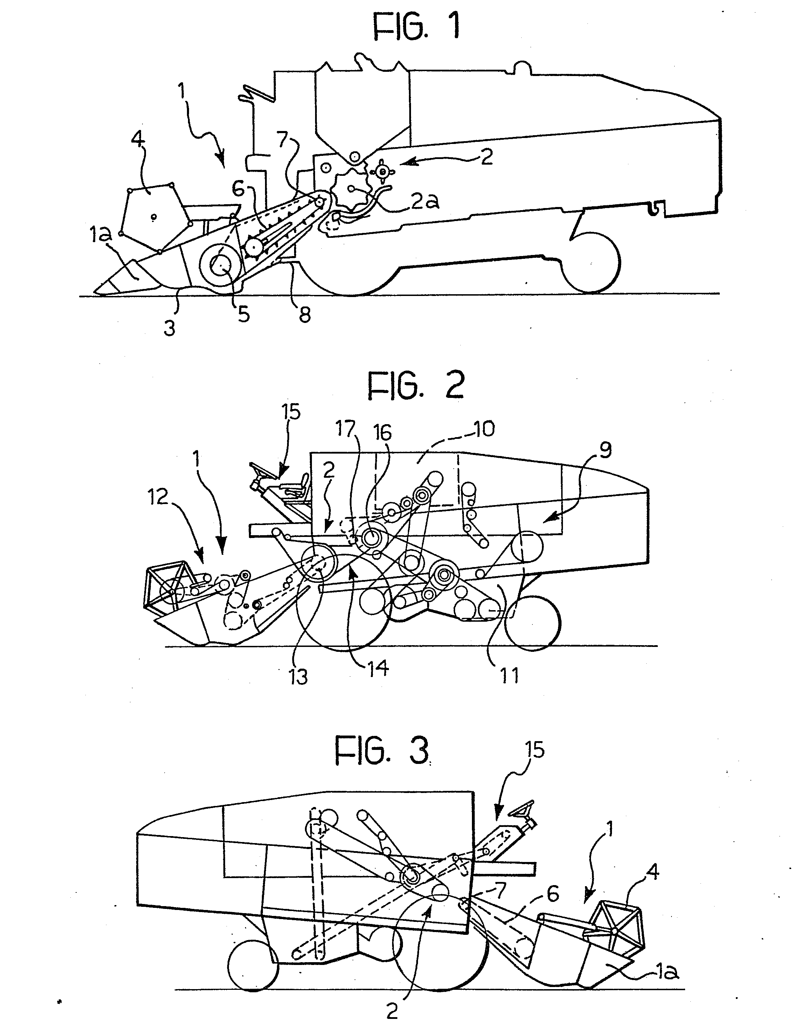

Figure 1 illustrates schematically a combine harvester of conventional type having a front unit 1 for harvesting the produce and a thresher unit 2. The front unit 1 includes a cutting platform 1a having a cutter bar 3, a reel 4 arranged to facilitate the introduction of the produce to the cutting platform 1a, a feed screw 5, and a bar elevator device 6 which receives the produce from the feed screw 5 and feeds it to the threshing apparatus. The shaft 7 located in correspondence with the discharge end of the bar elevator 6 can also be used as the shaft for articulating the cutting platform 1a to the chassis of the harvester, the platform 1a being raisable by means of actuators 8.

In Figure 2, there is shown a drive transmission, generally indicated 9, disposed on the left-hand side of the harvester, which takes drive from an engine 10 and drives all the rotary members of the front unit 1, the thresher unit 2, and the cleaning unit 11.

Figure 3 illustrates that part of the drive transmission 9 which is located on the right-hand side of the harvester.

All the members of the front unit 1 of the harvester are connected together by a driving chain 12 which terminates at a pulley 13 mounted on the shaft 7 of the elevator 6.

The pulley 13 is connected to the drive transmission 9 of the harvester by means of a belt drive 14 which

- 4 -

can be disengaged by a control from the driving position 15. The drive 14 connects the pulley 13 to a pulley 16 driven by the engine 10. The engagement and disengagement of the belt drive 14 may be achieved, in known manner, by the operation of a belt stretcher 17 or by an electromagnetic or mechanical friction clutch of known type (not shown) located in correspondence with the pulley 16.

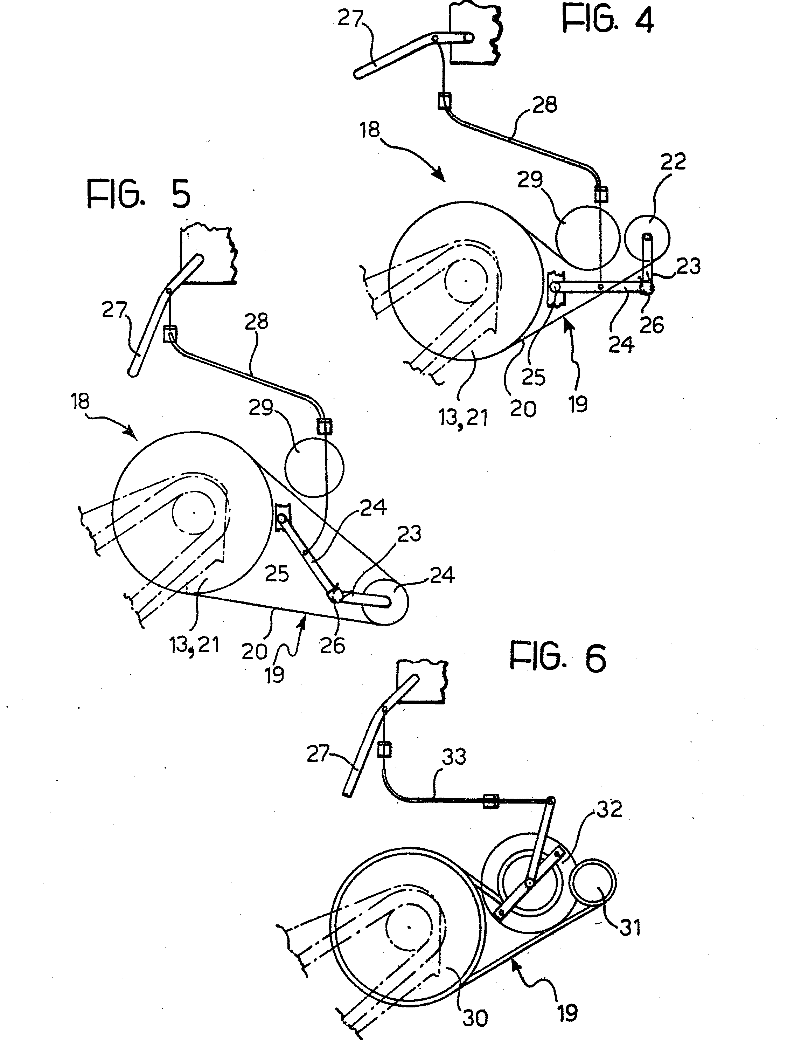

In the embodiment illustrated in Figures 4, 5 the combine harvester includes a reverser device 18 which includes an auxiliary drive transmission 19 for driving the rotation of the members of the front unit 1 in the opposite sense from that of normal operation. The transmission 19 includes a belt 20 which engages a pulley wheel 21 coaxial with the pulley 13 and a freely rotatable pulley 22 carried by a lever 23 articulated to one end of a lever 24 the opposite end of which is articulated, in its turn, to the chassis of the harvester at 25. A spring 26 interposed between the levers 23, 24 keeps the belt 20 always under tension.

The driving position has a control lever 27 connected through a cable 28 to the lever 24. By operating the lever 27, the operator can effect the movement of the transmission 19 between the operative condition illustrated in Figure 4 and the inoperative condition illustrated in Figure 5.

In the operative condition, the outer side of the belt 20 comes into contact with a pulley wheel 29 mounted on the end of the shaft of the threshing cylinder 2a (see Figure 1)which projects from the left-hand side of the harvester.

When the members of the front unit of the harvester jam as a result of a blockage by the produce, the transmission 14 (Figure 2)is disengaged in order to break the connection between the rotary members and the drive transmission 9 (Figure 2) of the harvester. At this point, the operator operates the lever 27 (see Figures 4, 5) so as to bring the transmission 19 into the operative condition illustrated in Figure 4 and effect the movement of the members of the unit 1 of the harvester in the opposite sense to expel the material which has caused the jamming of these members.

The device illustrated above has obvious advantages of simplicity and economy, may easily be adapted to a machine lacking a reverser device to begin with, and also allows gradual operation of the reversal phase. The operator may in fact operate the lever 27 so as to cause a measured and controlled bringing together of the belt 20 and the pulley wheel 29 to avoid a violent reversal. Thus, there is no risk of two sharp,harmful blows to the transmission, by virtue of the fact that the belt 20 engages the groove in the pulley 29 progressively and may, at the limit, slip relative to the pulley.

The outer side of the belt 20 engages the pulley wheel 29 to allow the reversal of movement.

The pulley wheel 21 has a much larger diameter than the diameter of the pulley wheel 29 to enable a reversing couple to be achieved on the shaft 7 (Figure 1) which is sufficient to overcome easily

- 6 -

any braking torque applied to the various members.

The embodiment illustrated in Figure 6 differs from that of Figures 4, 5 in that the transmission 19 is constituted by a chain transmission, the inner side of which engages a gear wheel 30 carried by the shaft 7 (Figure 1) and a gear wheel 31 freely rotatably mounted on the chassis of the harvester, and the outer side of which engages a gear wheel 32 which can be connected to the shaft of the threshing cylinder 2a (Figure 1) by a friction clutch of conventional type (the structure of which is not shown in detail) driven by a transmission 33 connected to the control lever 27.

CLAIMS

1. Agricultural machine, particularly a combine harvester, including:

a front unit (1) for harvesting the produce and a produce treatment unit (2), including a series of rotary members (4, 5, 6, 2a),

a drive transmission (9) for the rotary members,

means (14) for disconnecting the connection between the drive transmission (9) and the rotary members of the front unit (1), and

reverser means for rotating the rotary members of the front unit (1) of the machine in the opposite sense from that of normal operation in order to expel material and free the rotary members in the event of a blockage by the produce,

characterised in that the reverser means comprise an auxiliary drive transmission (19) which can be engaged when the blockage occurs to connect the rotary members of the front unit (1) of the machine to a continuously rotating shaft (29) forming part of the produce treatment unit (2).

2. Combine harvester according to Claim 1, characterised in that the rotating shaft is the shaft of the threshing cylinder (2a) forming part of the thresher unit of the harvester.

3. Combine harvester according to Claim 2, in which the combine harvester includes a front unit having an elevator device (6), characterised in that the rotary members of this front unit (1) are connected

0123657

- 8 -

together by a driving chain (12) which terminates at a shaft (7) located in correspondence with the discharge end of the elevator device (6), and in that this shaft (7) is connected to the drive transmission (9) of the harvester through a belt drive (14) which can be disengaged by a control from the driving position.

4. Combine harvester according to Claim 3, characterised in that the shaft 7 of the elevator device (6) also carries a wheel (21) connected by means of the auxiliary disengageable transmission (19) to the shaft of the threshing cylinder (2a).

5. Combine harvester according to Claim 4, characterised in that the auxiliary transmission (19) includes a belt transmission movable between an operative position in which the outer side (20) of the belt is in contact with a wheel (29) carried by the shaft of the threshing cylinder (2a), and an inoperative position in which the belt (20) is spaced from the wheel (29) carried by the shaft of the threshing cylinder (2a).

6. Combine harvester according to Claim 4, characterised in that the auxiliary transmission (19) is constituted by a chain drive the outer side of which engages a gear wheel (32) mounted on the shaft of the threshing cylinder (2a) and connectible to this shaft by means of a clutch device.

7. Combine harvester according to Claim 5 or Claim 6, characterised in that the wheel (13, 21, 30) mounted on the shaft (7) of the elevator device (6) has a considerably larger diameter than the wheel (29) mounted on the shaft of the threshing cylinder (2a).

FIG. 1

FIG. 2

FIG. 3

2/2

0123657

FIG. 4

FIG. 5

FIG. 6

## EUROPEAN SEARCH REPORT

### DOCUMENTS CONSIDERED TO BE RELEVANT

EP 84830083.6

| Category | Citation of document with indication, where appropriate, of relevant passages | Relevant to claim | CLASSIFICATION OF THE APPLICATION (Int. Cl. ³) |
|---|---|---|---|
| X | <u>US - A - 4 038 880</u> (GARRISON)<br>* Column 3, line 18 - column 6, line 11; fig. 1-5 * | 1-7 | A 01 D 41/12<br>A 01 D 69/06<br>F 16 H  9/04 |
| Y | <u>DE - A1- 3 014 914</u> (CLAAS OHG)<br>* Page 3, lines 1-14 * | 1 | |
| Y | <u>FR - A1 - 2 373 002</u> (STAFOR)<br>* Fig. 1,3 * | 1 | |
| A | <u>DE - A - 2 410 462</u> (PIETRO LAVERDA)<br>* Page 8, line 16 - page 9, line 13; fig. 6,7 * | 1,2 | |
| A | <u>GB - A - 2 024 963</u> (SPERRY RAND)<br>* Abstract * | 1 | **TECHNICAL FIELDS SEARCHED (Int. Cl. ³)** |
| A | <u>US - A - 4 046 022</u> (HENDERSON) | | A 01 D 41/00<br>A 01 D 69/00<br>F 16 H  7/00 |
| A | <u>US - A - 3 334 522</u> (TOFFIN) | | F 16 H  9/00<br>F 16 H 37/00 |

The present search report has been drawn up for all claims

| Place of search | Date of completion of the search | Examiner |
|---|---|---|
| VIENNA | 23-07-1984 | SCHWAB |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82